# EUROPEAN PATENT APPLICATION

(11) **EP 2 383 061 A1**
(43) Date of publication of application: **02.11.2011**
(21) Application number: 10161610.0
(22) Date of filing: 30.04.2010
(51) Int. Cl.: B23C 5/22, B23C 5/24

(54) **Cutting tool with wedge arrangement**

(71) Applicant: Seco Tools AB, 737 82 Fagersta (SE)
(72) Inventor: Jansson, Mikael, SE-774 67, Avesta (SE); Koskinen, Jorma, SE-737 33, Fagersta (SE)
(74) Representative: Hägglöf, Henrik

(57) **Abstract**

A cutting tool (21), includes a toolholder (23) having a cutting insert receiving recess (25) and an internally threaded toolholder hole (29 or 83), a cutting insert (27) disposed in the recess (25), a wedge (31 or 79) contacting a surface (33) of the insert (27), the wedge (31 or 79) having an internally threaded wedge hole (35 or 85) and a screw (37 or 77) having first and second externally threaded portions (39 and 41 or 87 and 89, respectively) with threads (43 and 45 or 91 and 93, respectively) mating with threads (47 and 49 or 95 and 97, respectively) in the internally threaded toolholder hole (29, 83) and in the internally threaded wedge hole (35 or 85), respectively. The threads (43 and 45 or 91 and 93) of the first and second externally threaded portions (39 and 41 or 87 and 89) have the same handedness.

## Description

### BACKGROUND AND SUMMARY

The present invention relates generally to cutting tools and, more particularly, to cutting tools that use wedges for clamping and or position adjustment of cutting inserts.

In cutting tools of the type that use replaceable cutting inserts, the inserts are sometimes clamped in place using a wedge that abuts against a clamping surface of the insert. A screw extends through a hole in the wedge and threads of the screw mate with internal threads of a hole in the toolholder. The screw holds the wedge in place either by means of an enlarged head on the screw that cannot pass through the hole in the wedge or by means of a second set of external threads on the screw that mate with internal threads in the wedge. In either case, as the screw is screwed in tighter, the wedge moves to more firmly clamp against the insert. When no second set of external threads is provided on the screw, the wedge moves inwardly an amount equal to the pitch of the threads on the screw for each 360° rotation of the screw. When a second set of external threads is provided, the second set of external threads is of an opposite handedness than the first set of external threads on the screw so that, as the screw is screwed into the internal threads of the hole in the toolholder, the wedge moves an amount equal to the pitch of the threads on the screw plus the pitch of the second set of threads on the screw for each 360° turn of the screw. Similar wedge and screw arrangements are often provided for adjustment of the position of inserts relative to toolholders, as well.

It is desirable to provide a clamping and/or adjustment arrangement for inserts that facilitates fine tuning of the clamping force and/or the position of the insert.

According to an aspect of the present invention, a cutting tool includes a toolholder having a cutting insert receiving recess a and an internally threaded toolholder hole, a cutting insert disposed in the recess, a wedge contacting a surface of the insert, the wedge having an internally threaded wedge hole, and a screw having first and second externally threaded portions with threads mating with threads in the internally threaded toolholder hole and in the internally threaded wedge hole, respectively. The threads of the first and second externally threaded portions have the same handedness.

### BRIEF DESCRIPTION OF THE DRAWINGS

The features and advantages of the present invention are well understood by reading the following detailed description in conjunction with the drawings in which like numerals indicate similar elements and in which:

FIGS. 1A and 1B are perspective views of a cutting tool according to an aspect of the present invention;

FIGS. 2A and 2B are cross-sectional views of a portion of the cutting tool of FIG. 1B taken at sections 2A-2A and 2B-2B, respectively;

FIG. 3A is a schematic, partially cross-sectional view of portions of a cutting tool according to an aspect of the present invention; and

FIG. 3B is a cross-sectional view of a portion of the cutting tool of FIG. 3A taken at section 3B-3B.

### DETAILED DESCRIPTION

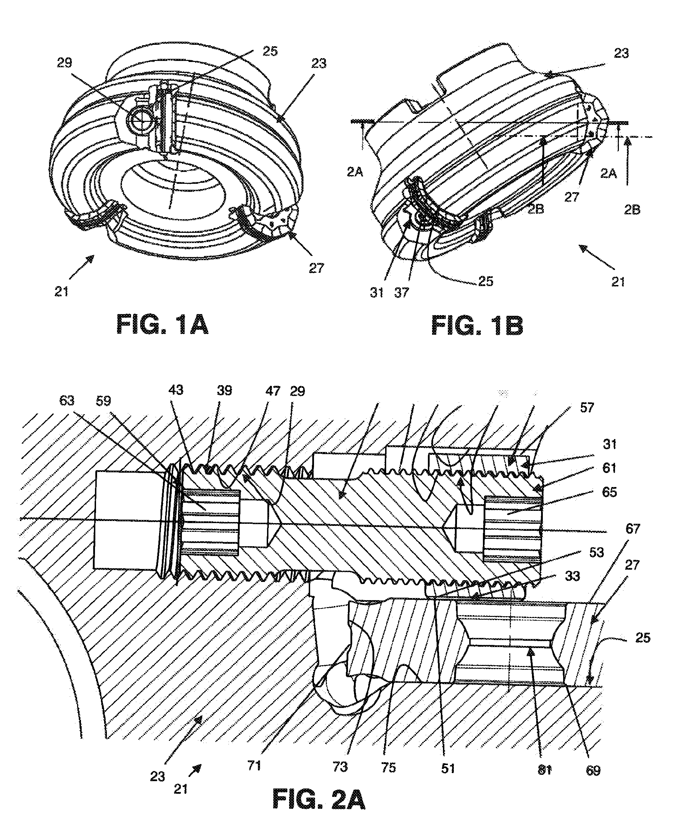

A cutting tool 21 is shown in FIGS. 1A-1B. The cutting tool 21 comprises a toolholder 23 having a recess 25 for receiving a cutting insert 27 and an internally threaded toolholder hole 29. The cutting tool 21 further comprises a cutting insert 27 disposed in the recess 25. The toolholder 23 further comprises a wedge 31 contacting a surface 33 of the insert 27. The wedge 31 has an internally threaded wedge hole 35. The cutting insert 27 can be manufactured from directly pressed cemented carbide. By the term "cemented carbide" is here meant WC, TiC, TaC, NbC, etc., in sintered combination with a binder metal such as, for instance, Co or Ni. The cutting insert is preferably at least partly coated with layers of, e.g., Al₂O₃, TiN and/or TiCN. In certain cases, it may be justified that the cutting edges consist of soldered superhard materials such as CBN or PCD.

The toolholder 21 further comprises a screw 37 having first and second externally threaded portions 39 and 41, respectively, with threads 43 and 45, respectively, that mate with threads 47 and 49, respectively, in the internally threaded toolholder hole 29 and in the internally threaded wedge hole 35, respectively.

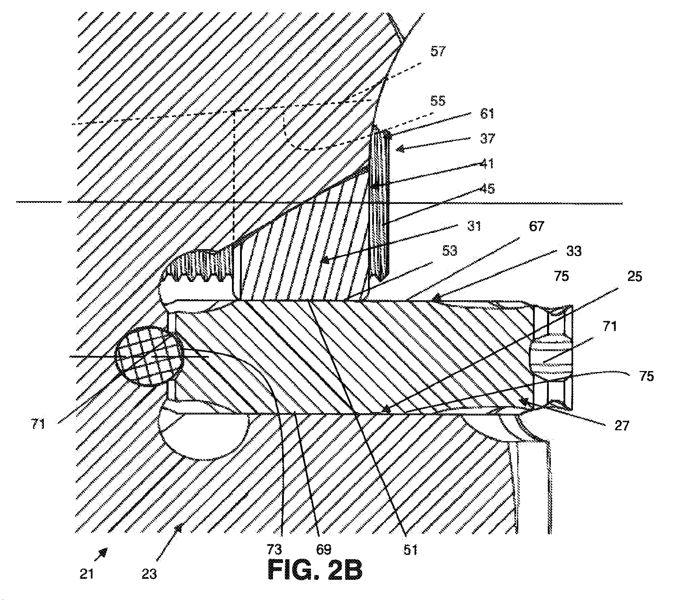

The threads 43 and 45 of the first and second externally threaded portions 39 and 41 (and the mating threads 47 and 48 of the holes 29 and 35) have the same handedness, i.e., both right handed or both left handed. Consequently, when the wedge 31 contacts the surface 33 of the insert 27 and is prevented from turning when the screw 37 is turned, when the screw 37 is screwed into the toolholder hole 29, the screw will move to the left in FIGS. 2A and 2B, while the wedge 31 will move, relative to the screw at least, to the right. The "effective pitch" of such a screw 37 for purposes of how far the wedge 31 is advanced with each rotation of the screw is the pitch of the threads 43 of the first externally threaded portion 39 that mate with the threads 47 of the toolholder hole 29 minus the pitch of the threads 45 of the second externally threaded portion 41 that mate with the threads 49 of the wedge hole 35. An example can be mentioned wherein the pitch of the threads 43 and 47 is 1.0 mm and the pitch of the threads 45 and 49 is 0.75 mm resulting in an effective pitch of 0.25 mm.

The threads 43 of the first externally threaded portion 39 ordinarily have a different pitch than the threads 45 of the second externally threaded portion 41. In the embodiment illustrated in FIGS. 2A-2B, the wedge 31 is a clamping wedge having a wedge clamping surface 51 that contacts a clamping surface 53 of the insert 27 and, ordinarily, a toolholder surface 55 on a wedge toolholder surface 57 on a side of the wedge opposite the wedge clamping surface. In this embodiment, by providing the threads 43 of the first externally threaded portion 39 that mate with threads 47 in the toolholder hole 29 with a greater pitch than the threads 45 of the second externally threaded portion 41 that mate with threads 49 in the wedge hole 35, the clamping force on the insert can be gradually increased through multiple turns of the screw.

As seen, for example, in FIG. 2A, the wedge 31 need not contact the clamping surface 53 or the toolholder surface 55 at all points on the sides of the wedge clamping surface 51 and the wedge toolholder surface 57 and FIG. 2A shows a space between the wedge 31 and the clamping surface and the toolholder surface at Section 2A-2A of FIG. 1B. FIG. 2B shows that the wedge 31 can contact the clamping surface 53 and the toolholder surface 55 at other points, such as at Section 2B-2B of FIG. 1B.

The screw 37 comprises first and second ends 59 and 61, respectively, proximate the first and second externally threaded portions 39 and 41, respectively. A key grip 63 and/or 65 is provided at at least one of, ordinarily both of, the first and second ends 59 and 61, respectively. The key grip 63 and/or 65 can be a male or, more typically, a female key grip, such as for use with an Allen wrench. Providing a key grip 63 and 65 at both ends 59 and 61 of the screw 37, and also providing access to the key grip 65 at the first end 59 of the screw, usually be extending the toolholder hole 29 through to an exterior surface of the toolholder 23, can facilitate, e.g., removal of the screw in the event that the key grip at one end or the other is damaged. Also, key grips at opposite ends of the screw can facilitate tightening and/or removal of the screw when there is only limited access to the screw at both ends of the screw, such as because of the limited size of a flute of the toolholder.

The insert 27 can have a top surface 67, a bottom surface 69, and one or more side surfaces 71 extending between the top surface and the bottom surface. Ordinarily, the insert is supported in the recess by contact with abutment surfaces of the recess at three supporting surfaces on the insert. Typically, the bottom surface 69 is one supporting surface and two portions of the side surface 71 form side supporting surfaces.

Often, the insert 27 is indexable so that the insert can be turned relative to the toolholder 23 to permit use of different cutting edges on the insert while the insert is supported against side abutment surfaces 73 in the recess 25 at different side supporting surfaces on the side surface. The recess 25 has a bottom abutment surface 75 for abutting the bottom surface 69. If the insert 27 is a double sided insert, the insert can be flipped over in the recess so that either the bottom surface 69 or the top surface 67 can abut the bottom abutment surface 75.

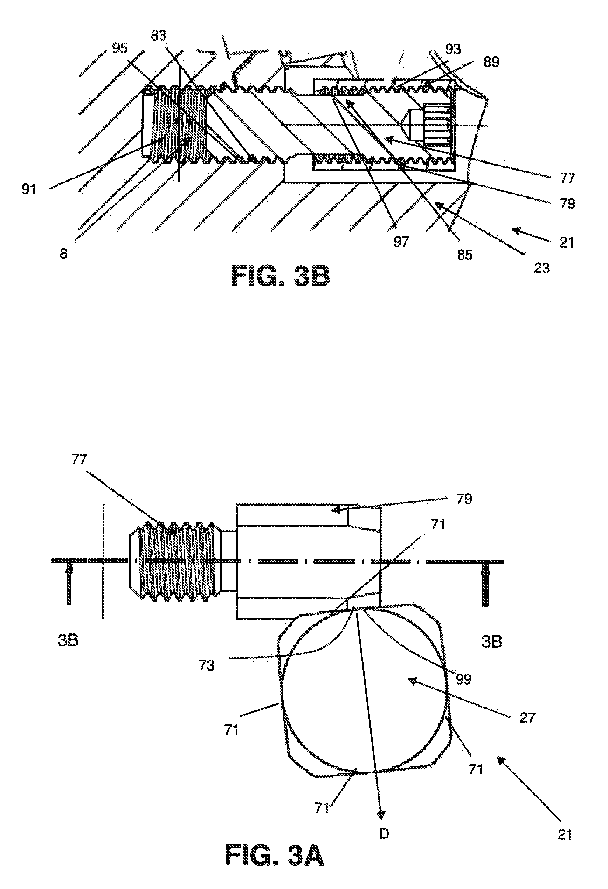

The bottom abutment surface 75 and the side abutment surfaces 73 are typically fixed surfaces formed by machining the recess 25 into the toolholder 23. However, one or more of the bottom abutment surface 75 and, more typically, one or more of the side abutment surfaces 73 can be adjustable surfaces to permit fine tuning of the position of the cutting edge of the insert 27 relative to the toolholder 23. As seen in FIGS. 3A and 3B, a screw 77 and wedge 79 arrangement similar to that described in connection with the screw 27 and wedge 31 for clamping of the insert 27 can provide such a fine tuning option.

It will be appreciate that, instead of using the screw 27 and wedge 31 for clamping of the insert 27, a screw (not shown) with an enlarged head can extend through a hole 81 (FIG. 2A) in the insert 27 so that threads of the screw mate with threads of an internally threaded hole (not shown) in the toolholder and the enlarged head forms a clamping surface that abuts a clamping surface on the insert to clamp the insert in place. Instead of or in addition to a wedge 31 and screw 37 for clamping of the insert 27, the toolholder 23 can have an internally threaded toolholder hole 83, an adjustment wedge 79, and an adjustment screw 77 for fine tuning of the position of the insert. The adjustment wedge 79 contacts a supporting surface of the insert 27, which is usually a side edge surface 71 of the insert that is perpendicular or substantially perpendicular to the top and bottom surfaces 67 and 69, which are typically the surfaces of the insert on which the clamping surface 53, if any, is provided. The adjustment wedge 79 has an internally threaded adjustment wedge hole 85, and the adjustment screw 77 has first and second externally threaded portions 87 and 89 with threads 91 and 93, respectively, mating with threads 95 and 97, respectively, in the internally threaded toolholder hole 83 and in the internally threaded adjustment wedge hole, respectively.

The threads 91 and 93 of the first and second externally threaded portions 87 and 89 of the adjustment screw 77 (and the mating threads 95 and 97 of the holes 83 and 85) have the same handedness, i.e., right handed or left handed. The threads 91 of the first externally threaded portion 87 of the adjustment screw 77, which mate with the threads 95 in the internally threaded toolholder hole 93, have a different pitch than the threads 93 of the second externally threaded portion 89 of the adjustment screw, which mate with the threads 97 in the internally threaded wedge hole 85.

The wedge surface 99 of the wedge 79 that contacts the supporting surface of the insert defines an abutment surface and can be angled so that the position of cutting edges depends upon where the wedge surface is located in the recess 25. If, as seen, for example, in FIG. 3A, a supporting surface of the insert 27 contacts the wedge surface 99 forming one side abutment surface 73, movement of the wedge surface 99 to the right can result in movement of the position of the cutting edges, usually in a direction D (FIG. 3A) perpendicular to the wedge surface. If such adjustment wedge arrangements are provided for one or both of the other abutment surfaces, still more adjustment options arise.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such.

While this invention has been illustrated and described in accordance with a preferred embodiment, it is recognized that variations and changes may be made therein without departing from the invention as set forth in the claims.

## Claims

1. A cutting tool (21), comprising:
a toolholder (23) having a cutting insert receiving recess (25) and an internally threaded toolholder hole (29 or 83);
a cutting insert (27) disposed in the recess (25);
a wedge (31 or 79) contacting a surface (33) of the insert (27), the wedge (31 or 79) having an internally threaded wedge hole (35 or 85);
a screw (37 or 77) having first and second externally threaded portions (39 and 41 or 87 and 89, respectively) with threads (43 and 45 or 91 and 93, respectively) mating with threads (47 and 49 or 95 and 97, respectively) in the internally threaded toolholder hole (29, 83) and in the internally threaded wedge hole (35 or 85), respectively,
**characterized in that** the threads (43 and 45 or 91 and 93) of the first and second externally threaded portions (39 and 41 or 87 and 89) have the same handedness.

2. The cutting tool (21) as set forth in claim 1, **characterized in that** the threads (43 or 91) of the first externally threaded portion (39 or 87) have a different pitch than the threads (45 or 93) of the second externally threaded portion (41 or 89).

3. The cutting tool (21) as set forth in any of claims 1-2, **characterized in that** the threads (43 or 91) of the first externally threaded portion (39 or 87) have a greater pitch than the threads (45 or 93) of the second externally threaded portion (41 or 89).

4. The cutting tool (21) as set forth in any of claims 1-3, **characterized in that** the screw (37 or 77) comprises first and second ends (59 and 61) proximate the first and second externally threaded portions(39 and 41), and a key grip (63 and 65) provided at at least one of the first and second ends (59 and 61).

5. The cutting tool (21) as set forth in claim 4, **characterized in that** a female key grip (61) is provided at least at the second end (61).

6. The cutting tool (21) as set forth in any of claims 4-5, **characterized in that** female key grips (63 and 65) are provided at both the first end (59) and the second end (61).

7. The cutting tool (21) as set forth in any of claims 1-6, **characterized in that** the surface (33) of the insert (27) that the wedge (31) contacts is a clamping surface (53) of the insert (27).

8. The cutting tool (21) as set forth in any of claims 1-7, **characterized in that** the wedge (31) contacts a wedge surface (55) of the toolholder (23).

9. The cutting tool (21) as set forth in any of claims 1-8, **characterized in that** the toolholder (23) has a second internally threaded toolholder hole (83), an adjustment wedge (79) contacts a supporting surface of the insert (27), the adjustment wedge (79) having an internally threaded adjustment wedge hole (85), and an adjustment screw (77) has first and second externally threaded portions (87 and 89) with threads (91 and 93) mating with threads (95 and 97) in the second internally threaded toolholder hole (83) and in the internally threaded adjustment wedge hole (85), respectively.

10. The cutting tool (21) as set forth in any of claims 1-9, **characterized in that** the threads (91 and 93) of the first and second externally threaded portions (87 and 89) of the adjustment screw (77) have the same handedness.

11. The cutting tool (21) as set forth in any of claims 9-10, **characterized in that** the threads (91) of the first externally threaded portion (87) of the adjustment screw (77) have a different pitch than the threads (93) of the second externally threaded portion (89) of the adjustment screw (77).

12. The cutting tool (21) as set forth in any of claims 1-6, **characterized in that** the surface of the insert (27) that the wedge (79) contacts is a supporting surface of the insert (27).

13. The cutting tool (21) as set forth in any of claims 1-6 and 12, **characterized in that** the toolholder (23) has a second internally threaded toolholder hole (29), a clamping wedge (31) contacts a clamping surface (53) of the insert (27), the clamping wedge (31) having an internally threaded clamping wedge hole (35), and a clamping screw (37) has first and second externally threaded portions (39 and 41) with threads (43 and 45) mating with threads (47 and 49) in the second internally threaded toolholder hole (29) and in the internally threaded clamping wedge hole (35), respectively.

14. The cutting tool (21) as set forth in claim 13, **characterized in that** the threads (43 and 45) of the first and second externally threaded portions (39 and 41) of the clamping screw (37) have the same handedness.

15. The cutting tool (21) as set forth in any of claims 13-14, **characterized in that** the threads (43) of the first externally threaded portion (39) of the clamping screw (37) have a different pitch than the threads (45) of the second externally threaded portion (41) of the clamping screw (37).
